# EUROPEAN PATENT SPECIFICATION

(11) **EP 3 341 260 B1**
(45) Date of publication and mention of the grant of the patent: **23.10.2019**
(21) Application number: 16771004.5
(22) Date of filing: 24.08.2016
(51) Int. Cl.: B62B 3/12

(54) **COLLAPSIBLE GOLF TROLLEY WITH FRONT WHEEL JOINT**
FALTBARER GOLFWAGEN MIT VORDERRADGELENK
CHARIOT DE GOLF PLIABLE À ARTICULATION DE ROUE AVANT

(30) Priority: 26.08.2015 NL 2015352
(43) Date of publication of application: 04.07.2018
(73) Proprietor: A.C.M. Products B.V., 4879 NA Etten-Leur (NL)
(72) Inventor: WIJNSTRA, Reinier, 1087 DM Amsterdam (NL)
(74) Representative: Wijnstra, Reinier
(86) International application number: PCT/NL2016/050589
(87) International publication number: WO 2017/034404

(56) References cited:
- CN-U- 204 341 142
- GB-A- 2 503 491
- US-A1- 2009 066 056

## Description

The invention relates to a collapsible golf trolley according to the preamble of claim 1.

A collapsible golf trolley of this type is used to carry and transport a golf bag with golf clubs.

A collapsible golf trolley of this type is known from CN-204.341.142-U. This utility model discloses a collapsible golf trolley with three wheels. The golf trolley has a frame, a front wheel, a front wheel support, and a front wheel joint. The rear wheels and their collapsing mechanism are not disclosed. The front wheel is mounted on the front wheel support. The front wheel support is connected via the front wheel joint to a forward end of the frame. The front wheel joint comprises a right outer joint part, a left outer joint part, a middle joint part, and a spindle. The right outer joint part and the left outer joint part are mounted on the forward end of the frame. The middle joint part is positioned between the right outer joint part and the left outer joint part, and is rotatable with respect to the right outer joint part and the left outer joint part about a transverse pivot axis which is parallel to the rotation axes of the front wheel in the use position. The front wheel support with the front wheel is mounted on an end of the spindle. The spindle extends within the middle joint part, and is rotatable with respect to the middle joint part about a longitudinal pivot axis which extends from the front wheel to the front wheel joint and is perpendicular to the rotation axis of the front wheel and the transverse pivot axis.

The rotation of the middle joint part with respect to the outer joint parts of the known collapsible golf trolley is coupled to the rotation about the longitudinal pivot axis via a sleeve with radial extending teeth which is mounted on the spindle, and a flat partly circular toothed rack, which is mounted inside of the left and/or right outer joint part.

A disadvantage of the known collapsible golf trolley is that the assembly of the front wheel joint is complicated and thus expensive.

The invention aims to solve to this problem, or at least to provide an alternative. In particular, the invention aims to provide a collapsible golf trolley which is more simple to produce than the golf trolley of CN-204.341.142-U.

This aim is achieved by a collapsible golf trolley according to claim 1.

A collapsible golf trolley comprises a frame, a front wheel, a front wheel support, a front wheel joint, a left rear wheel, and a right rear wheel. Each wheel is connected with the frame and is rotatable about a rotation axis. The front wheel is mounted on the front wheel support, and the front wheel support is connected via the front wheel joint to a forward end of the frame for collapsing the front wheel from a use position to a collapsed position. The front wheel joint comprises a right outer joint part, a left outer joint part, a middle joint part, and a spindle. The right outer joint part and the left outer joint part are mounted on the forward end of the frame. The middle joint part is positioned between the right outer joint part and the left outer joint part, and is rotatable with respect to the right outer joint part and the left outer joint part about a transverse pivot axis which is substantially parallel to the rotation axes of the front wheel in the use position. The front wheel support with the front wheel is mounted on an end of the spindle. The spindle extends within the middle joint part, and is rotatable with respect to the middle joint part about a longitudinal pivot axis which extends from the front wheel to the front wheel joint and is perpendicular to the rotation axis of the front wheel and the transverse pivot axis. The front wheel joint comprises a slider, the slider comprising a first slider pin, the slider being slidable along the longitudinal pivot axis. The spindle comprises a first helical slit on an outside of the spindle facing the middle joint part. The middle joint part comprises a first straight slit. One of the right outer joint part and left outer joint part comprises a first spiral slit on an inside of the respective outer joint part facing the middle joint part. The first slider pin extends through the first helical slit, the first straight slit, and the first spiral slit for coupling a rotating movement of the middle joint part with respect to the right outer joint part and the left outer joint part about the transverse pivot axis with a rotating movement of the spindle with respect to the middle joint part about the longitudinal pivot axis.

It is noted that the expression front, forward part, rear, left, and right are defined with respect to the direction wherein the golf trolley is intended to be pushed. The rotation axis of the wheels extend perpendicular to the direction wherein the golf trolley is intended to be pushed. It is further noted that while the longitudinal pivot axis is perpendicular to the rotation axis of the front wheel and the transverse pivot axis, these axis are intersecting in a preferred embodiment, but not intersecting in another embodiment. The expression substantially parallel is to be interpreted such, that an angle between the relevant axis, seen from any viewpoint, is less than 15°, in particular less than 10°, more in particular less than 5°. The expression slit on an outside/inside is to be interpreted as either a through slit which is not only on the indicated side, but also on the opposite side of that same sleeve or outer joint part, or as a groove with a limited depth which is only on the indicated side of the relevant sleeve or outer joint part.

The coupling mechanism of the current invention merely requires a slider pin and slits in the different parts of the front wheel joint. This is more simple to produce and assemble than the mechanism of CN-204.341.142-U which requires a sleeve with radial extending teeth and a flat partly circular toothed rack in the right and/or left outer joint parts. Document GB2503491A shows a front wheel folding device for a three-wheel cart with a folding mechanism for the front wheel of the three-wheel cart.

Preferred embodiments are defined in the dependent claims.

In an embodiment, the slider comprises a slider body, the spindle has a slider space extending in the direction of the longitudinal pivot axis, the slider body is held in the slider space for sliding along the longitudinal pivot axis, the first slider pin is mounted on the slider body, the first helical slit is a through slit so that the slider pin extends from the slider body through the first helical slit to the first straight slit, and the first spiral slit. The slider body improves the stability of the orientation of the first slider pin.

In an embodiment, the spindle comprises a second helical slit on the outside of the spindle opposite of the first helical slit, the middle joint part comprises a second straight slit opposite of the first straight slit, the other one of the right outer joint part and left outer joint part comprises a second spiral slit on an inside of the respective outer joint part facing the middle joint part, and the slider comprises a second slider pin extending through the second helical slit, the second straight slit, and the second spiral slit. By providing a second pin and second helical, straight, and spiral slits, opposite of the first pin and slits, the reliability of the front wheel joint is improved.

In particular, the first slider pin is a first end of a joint slider pin and the second slider pin is a second end of the same joint slider pin, and the first helical slit and the second helical slit are through slits so that the joint slider pin extends from the first spiral slit through the first straight slit, the first helical slit, the second helical slit, the second straight slit, to the second spiral slit. Accordingly, the joint slider pin is driven at its both sides by the first and second helical slit, thus further increasing the stability of the orientation of the slider pin.

In an embodiment, the spindle has an annular ridge, and the middle joint part has a corresponding annular groove for restricting movement of the spindle with respect to the middle joint part in the direction of the longitudinal pivot axis. This is a simple construction for securing the spindle in the required longitudinal position relative to the middle joint part, while allowing mutual rotation.

In an embodiment, the middle joint part comprises an annular shaped rim, extending in a direction parallel to the transverse pivot axis from an outer part of a side surface of the middle joint part facing either the right or the left outer joint part. The annular shaped rim and the side surface of the middle joint part define a cylindrical rotation space. The respective right or left outer joint part comprises an outer joint part body and a disk shaped outer joint part core having a smaller dimension than the outer joint part body in a radial direction and extending from the outer joint part body towards the side surface of the middle joint part. The outer joint part core is held in the cylindrical rotation space for rotating about the transverse pivot axis. This is a simple way of providing a transverse rotation axis, without the need for a separate spindle in the transverse direction.

The invention further relates to a collapsible golf trolley which comprises a frame, a front wheel, a front wheel support, a front wheel joint, a left rear wheel, and a right rear wheel. Each wheel is connected with the frame and is rotatable about a rotation axis, the front wheel being mounted on the front wheel support, and the front wheel support being connected via the front wheel joint to a forward end of the frame for collapsing the front wheel from a use position to a collapsed position. The front wheel joint comprises a right outer joint part, a left outer joint part, and a middle joint part. The right outer joint part and the left outer joint part are mounted on the forward end of the frame. The middle joint part is positioned between the right outer joint part and the left outer joint part, and is rotatable with respect to the right outer joint part and the left outer joint part about a transverse pivot axis which is substantially parallel to the rotation axes of the front wheel in the use position. The collapsible golf trolley comprises a locking mechanism, wherein the middle joint part comprises a rim extending in a direction parallel to the transverse pivot axis from an outer part of a side surface of the middle joint part facing either the right or the left outer joint part, the respective right or left outer joint part comprises an outer joint part body and an outer joint part core having a smaller dimension than the outer joint part body in a radial direction and extending from the outer joint part body towards the side surface of the middle joint part, the rim is aligned with and outside of the outer joint part core in the radial direction, the locking mechanism comprises a first locking pin and a first radial stop surface, the first locking pin is slidably held in a first cylindrical hole extending in a radial direction through the rim, and the first radial stop surface is provided at the outer joint part core for engaging the first locking pin in a protruded locking position of the first locking pin, locking the middle joint part with respect to the right and left outer joint part in a first annular position. Thanks to the rim, it is possible to have a radial sliding straight locking pin, which blocks the mutual rotation of outer joint parts and middle joint part in a simple manner without the need for a groove in the outer joint parts, as in some prior art solutions.

In an embodiment, the locking mechanism of this aspect of the invention is combined with the slider and related slits of the first aspect of the invention.

In an embodiment, the rim is the annular shaped ring, and the outer joint part core is the disk shaped outer joint part core. Combining these elements results in a simple construction.

In an embodiment, the locking mechanism comprises a first spring cavity and a first spring, the first spring cavity being provided around the first cylindrical hole and holding the first spring, the first spring urging the first locking pin into the protruded locking position. Thanks to the spring, a user can disengage the locking mechanism by pulling the first locking pin against the spring action.

In an embodiment, the locking mechanism comprises a second radial stop surface which is provided at the outer joint part core at a different angular position from the first radial stop surface for engaging the first locking pin in a protruded locking position of the first locking pin, locking the middle joint part with respect to the right and left outer joint part in a second annular position. In this embodiment, one of the first and second annular position corresponds to the use position of the front wheel, while the other one of the first and second annular position corresponds to the collapsed, or storage position of the front wheel.

In an embodiment, the locking mechanism comprises a partly circular stop groove comprising the first and optional second radial stop surface, and a first stopper, fixedly connected to the side surface of the middle joint part for moving through the partly circular stop groove, and engaging the first and the second radial stop surface. The first stopper allows the outer and middle joint parts to rotate relative to each other while it moves through the partly circular stop groove, and engages the first or the second radial stop surface in order to stop the rotation at the first or second annular position, indicating that the user should release the locking pin which will then engage the other of the first and the second radial stop surface.

The invention, its effects, and advantages will be explained in more detail on the basis of the schematic drawing, showing in:
Fig. 1 A golf trolley in use condition;
Fig. 2 The golf trolley of fig. 1 in folded condition;
Fig. 3 A cross section view through front wheel joint of the golf trolley of fig. 1;
Fig. 4 View IV-IV from fig. 3;
Fig. 5 A side view of an outer joint part of the front wheel joint of fig. 3;
Fig. 6 View VI-VI from fig. 5;
Fig. 7 A side view of an inner joint part of the front wheel joint of fig. 3;
Fig. 8 Cross section VIII-VIII from fig. 7;
Fig. 9 A side view of the spindle of fig. 3;
Fig. 10 View X-X from fig. 9;
Fig. 11 A side view of a slider of the front wheel joint of fig. 3;
Fig. 12 View XII-XII from fig. 11; and
Fig. 13 An exploded view of a second embodiment of a front wheel joint for the golf trolley of fig 1.

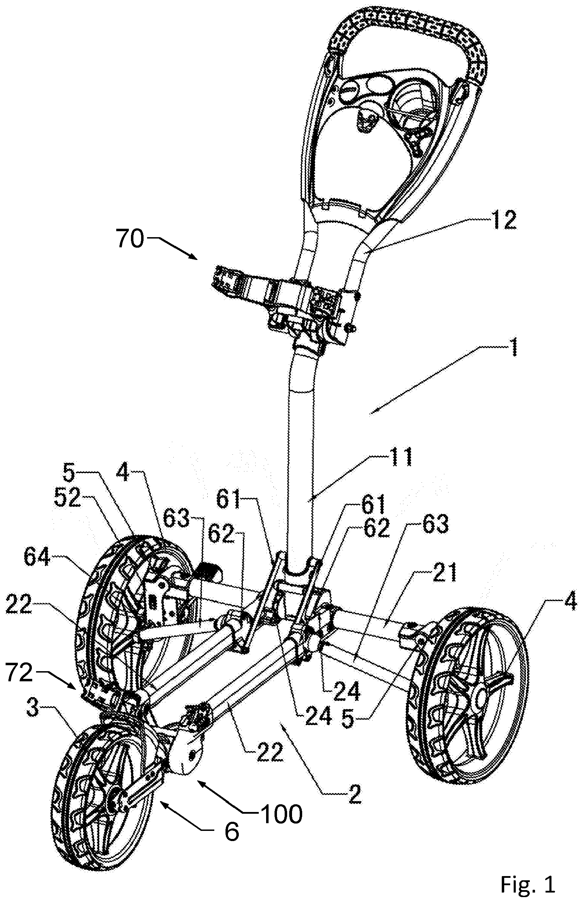

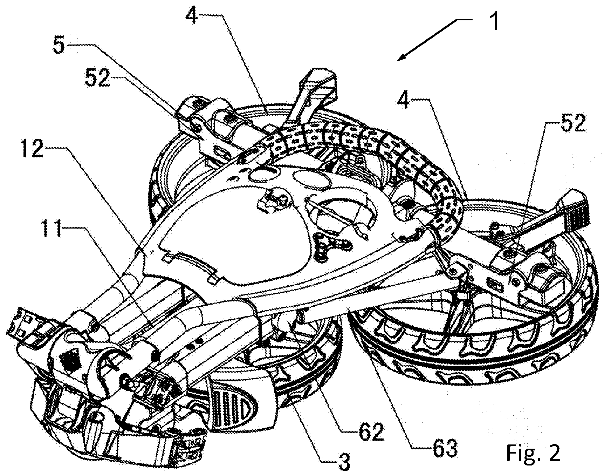

The figures show a collapsible golf trolley according to the invention, which is denoted in its entirety by reference number 1. The collapsible golf trolley 1 comprises a frame 2, a front wheel 3, a left and right rear wheel 4, a left and right rear wheel pivot 5, a front wheel support 6, and a front wheel joint 100. Each wheel 3, 4 is connected with the frame 2 and is rotatable about a rotation axis for a forward movement of the collapsible golf trolley 1. The front wheel 3 is mounted on the front wheel support 6, and the front wheel support 6 is connected via the front wheel joint 100 to a forward end of the frame 2 for collapsing the front wheel 3 from a use position (shown in fig. 1) to a collapsed position (shown in fig. 2).

The frame 2 comprises a push bar 11, and a push handle 12. The push bar 11, and the push handle 12 are connected pivotally with each other via a pivot which is not shown in detail. The frame 2 further comprises two side bars 21, two parallel longitudinal bars 22, two pivot mechanisms 24, two rear wheel supports 52, two first links 61, two sliders 62, and two second links 63. The two side bars 21, two parallel longitudinal bars 22, the pivot mechanisms 24, two rear wheel supports 52, two first links 61, two sliders 62, two second links 63, and two rear wheel pivots 5 provide for a collapsing mechanism of the rear wheels 4 of the collapsible golf trolley 1, coupled to a pivoting of the push bar 11 relative to the longitudinal bars 22. This mechanism is not described in detail here, but is disclosed in CN-204.337.672-U, which disclosure is herewith incorporated by reference.

The frame further comprises upper and lower support means 70, 72 for a golf bag (not shown). The upper support means 70 is mounted on the push handle 12. The lower support means 72 is mounted on the front end of the frame 2 and is in this embodiment integrated with the front wheel joint 100.

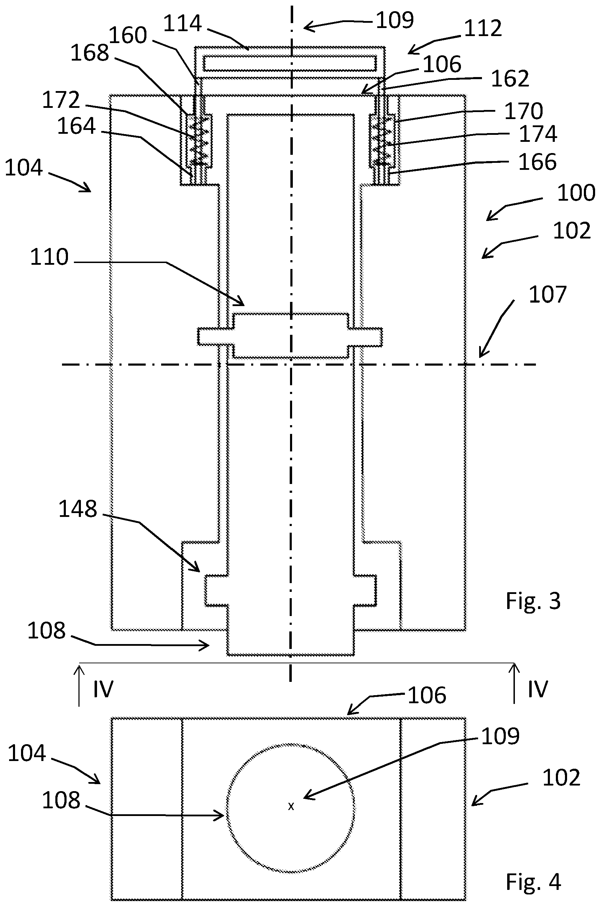

Figure 3 shows the front wheel joint 100 in detail, and in cross-section. The front wheel joint 100 comprises a right outer joint part 102, a left outer joint part 104, a middle joint part 106, and a spindle 108. The right outer joint part 102 and the left outer joint part 104 are mounted on the forward end of the frame 2, in this embodiment on the forward ends of longitudinal bars 22 (see fig. 1).

The middle joint part 106 is positioned between the right outer joint part 102 and the left outer joint part 104. The middle joint part 106 is rotatable with respect to the right outer joint part 102 and the left outer joint part 104 about a transverse pivot axis 107 which is parallel to the rotation axes of the front wheel 3 in the use position. The spindle 108 extends within the middle joint part 106, and is rotatable with respect to the middle joint part 106 about a longitudinal pivot axis 109 which extends from the front wheel 3 to the front wheel joint 100 and is perpendicular to the rotation axis of the front wheel 3 and the transverse pivot axis 107.

The front wheel joint 100 comprises a slider 110. The slider 110 is slidable along the longitudinal pivot axis 109. In this embodiment, the front wheel joint 100 further comprises a locking mechanism 112 and a grip 114.

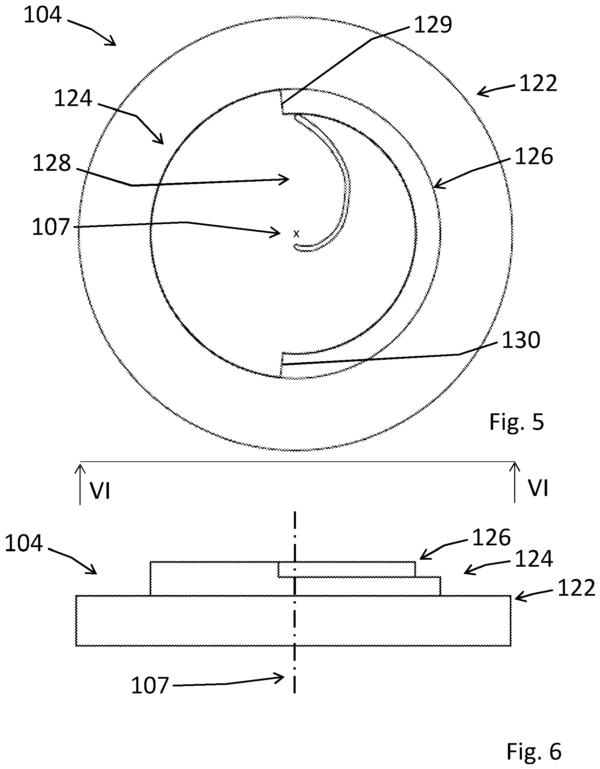

Figure 5 and 6 show the left outer joint part 104 in more detail. The left outer joint part 104 has a disk shaped outer joint part body 122, and a disk shaped outer joint part core 124, provided co-axially with the disk shaped outer joint part body 122. The disk shaped outer joint part core 124 has a smaller dimension than the disk shaped outer joint part body 122 in a radial direction and extends from one flat side of the disk shaped outer joint part body 122 towards the side surface of the middle joint part 106. The disk shaped outer joint part core 124 is provided with a partly circular stop groove 126, and a first spiral slit, in this embodiment a first spiral groove 128. The partly circular stop groove 126 runs along an edge of the disk shaped outer joint part core 124. The first spiral groove 128 is provided on a surface of the disk shaped outer joint part core 124, facing the middle joint part 106. The first spiral groove 128 starts close to the middle of the left outer joint part 104, which coincides with the transverse pivot axis 107. It runs outwards in the radial direction while running 180° in a tangential direction, in this embodiment an anti-clockwise direction. The partly circular stop groove 126 has a first radial stop surface 129, and a second radial stop surface 130.

In this embodiment, the right outer joint part 102 is a mirror image of the left outer joint part 104 and is therefore not shown and described in detail. The right outer joint part 102 comprises a second spiral groove (not shown).

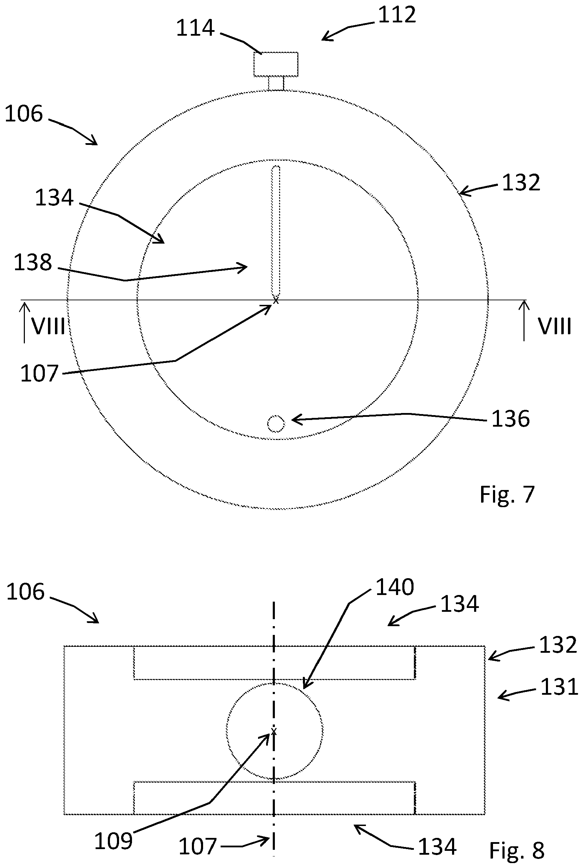

Figures 7 and 8 show the middle joint part 106 in detail. The middle joint part 106 of this embodiment has a disk shaped middle joint part core 131, an annular shaped rim 132, two cylindrical rotation spaces 134, a first stopper 136, a first straight slit 138, a second straight slit (not shown) and a cylindrical spindle receiving space 140. The annular shaped rim 132 is coaxial with the disk shaped middle joint part core 131 and extends from a radial outside part of the disk shaped middle joint part core 131 in both axial directions, i.e. parallel to the transverse pivot axis 107. Both side surface of the disk shaped middle joint part core 131 define together with the annular shaped rim 132 the cylindrical rotation spaces 134 on both sides of the middle joint part 106. The cylindrical rotation spaces 134 receive the disk shaped outer joint part cores 124 of the right outer joint part 102, the left outer joint part 104 respectively, for enabling a rotating movement of the middle joint part 106 with respect to the right outer joint part 102, and the left outer joint part 104, about the transverse pivot axis 107.

The cylindrical spindle receiving space 140 is coaxial with the longitudinal pivot axis 109. It is designed to receive spindle 108. The straight slit 138 is provided on the side surface of the disk shaped middle joint part core 131. It is a through-slit, which is open to the cylindrical rotation space 134 as well. It is noted that in this embodiment there is a second straight slit, and a second stopper (both not shown) on the side surface of the disk shaped middle joint part core 131 opposite of the side surface shown in fig. 7 as well.

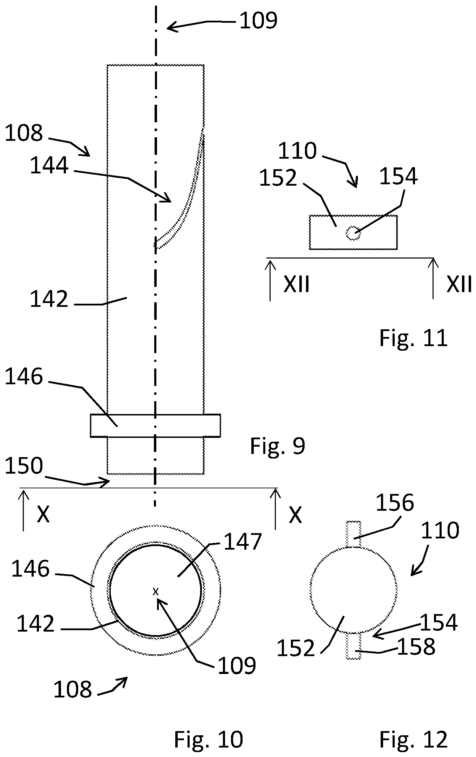

Figures 9 and 10 show the spindle 108 of this embodiment in more detail. The spindle 108 has a spindle tube 142, a first helical slit 144, an annular ridge 146, and a slider space, in this case a cylindrical space 147. The annular ridge 146 cooperates with an annular groove 148 which is provided coaxial with the cylindrical spindle receiving space 140 (fig. 3), thus preventing a linear movement of the spindle 108 with respect to the middle joint part 106 in the direction of longitudinal axis 109, while allowing a rotational movement of the spindle 108 in the cylindrical spindle receiving space 140. The cylindrical space 147 is coaxial with the spindle tube 142, and thus with the longitudinal pivot axis 109.

A lower end 150 of spindle 108 is connected to the front wheel support 6 (not shown in fig. 9). The first helical slit 144 is a through-slit provided on the outside surface of spindle tube 142, and open to the cylindrical space 147. The first helical slit 144 extends over 90° in tangential direction, corresponding to a 90° rotation of the front wheel 3 about the longitudinal pivot axis 109. In axial direction, the length of the first helical slit 144 corresponds to the length of straight slit 138. A second helical slit is not visible in the drawings and is provided on the backside (in the view of fig. 9) of spindle tube 142. The shape of the second helical slit is a line mirror image through longitudinal pivot axis 109. In other words, if the spindle 108 as shown in fig. 9 is rotated 180° about longitudinal pivot axis 109, then the view of fig. 9 would appear to be the same. The helical slits 144 on the outside surface of the spindle face the inside of the middle joint part 106, i.e. the wall of the cylindrical spindle receiving space 140.

Figures 11 and 12 show the slider 110. In this embodiment, the slider 110 comprises a cylindrical slider body 152, and a joint slider pin 154. The cylindrical slider body 152 is held in the cylindrical space 147 for sliding along the longitudinal pivot axis 109. A first end of the joint slider pin 154 acts as a first slider pin 156, and a second end of the same joint slider pin 154 acts as a second slider pin 158. The joint slider pin 154 is fixedly connected to the cylindrical slider body 152, extending through the middle of cylindrical slider body 152 and exiting the cylindrical slider body 152 from its cylindrical surface at opposite sides. The joint slider pin 154 extends from the first spiral groove in the left outer joint part 104 through the first straight slit 138 in the middle joint part 106, the first helical slit 144 in the spindle 108, the cylindrical slider body 152, the second helical slit in the spindle 108, the second straight slit in the middle joint part 106, to the second spiral groove in the right outer joint part 102. In this way, the joint slider pin 154 of the slider 110 couples a rotating movement of the middle joint part 106 with respect to the right outer joint part 102 and the left outer joint part 104 about the transverse pivot axis 107 with a rotating movement of the spindle 108 with respect to the middle joint part 106 about the longitudinal pivot axis 109. Put differently, by rotating the middle joint part 106 with respect to the right outer joint part 102 and the left outer joint part 104 about the transverse pivot axis 107, the first and second spiral grooves 128 will force the joint slider pin 154 radially outward or inward, depending on the direction of the rotation. This outward or inward movement is guided by the straight slits 138 into a straight linear movement parallel to the longitudinal pivot axis 109. This linear movement of the joint slider pin 154 forces the spindle 108 to rotate about the longitudinal pivot axis 109, via the helical slits 144. A full rotation of the middle joint part 106 of 180° brings the front wheel 3 from the folded position under longitudinal bars 22 of the frame 2 to an extended or use position in front of the frame 2, or reverse. At the same time, the wheel rotates 90° about the transverse pivot axis 107 from a folded position, parallel to a ground plane of the frame 2, in this embodiment defined by the two longitudinal bars 22, to a use position, perpendicular to the ground plane of the frame 2, or reverse.

The locking mechanism 112 comprises a first locking pin 160 and in this embodiment a second locking pin 162. The first and second locking pins 160, 162 are at their outside end fixed and connected to each other via the grip 114. Each locking pin 160, 162 is slidably held in a first and second cylindrical hole 164, 166, that each extend in a radial direction through the annular shaped rim 132 of the middle joint part 106. In this embodiment, the locking mechanism 112 comprises a first spring cavity 168, a second spring cavity 170, a first spring 172, and a second spring 174. The first spring cavity 168 is provided around the first cylindrical hole 164 and holds the first spring 172. The second spring cavity 170 is provided around the second cylindrical hole 166 and holds the second spring 174. The first and second springs 172, 174 urge the locking pins 160, 162 into a protruded locking position.

In the protruded locking position, the locking pins 160, 162 abut one of the first or second radial stop surface 129, 130. In the same annular position of the middle joint part 106 relative to the right and left outer joint parts 102, 104, the first stopper 136 abuts the other one of the first or second radial stop surface 129, 130. Thanks to the springs 172, 174, a user can disengage the locking mechanism 112 by pulling the grip 114. This forces the locking pins 160, 162 to slide in the first and second cylindrical holes 164, 166 against the spring action, thus releasing the engagement with the relevant radial stop surface 129, 130. This allows the middle joint part 106 to rotate with respect to the right and left outer joint parts 102, 104. During this rotation, the free or inward ends of the locking pins 160, 162 move outside of the disk shaped outer joint part core 124. At the same time, the first stopper 136 moves through the partly circular stop groove 126. The rotation ends when the first stopper 136 abuts the first or second radial stop surface 129, 130. At this position, the locking pins 160, 162 align with the other of the first or second radial stop surface 129, 130, and the springs 172, 174 urge the locking pins 160, 162 back into the partly circular stop groove 126 if the user releases the pulling force on the grip 114.

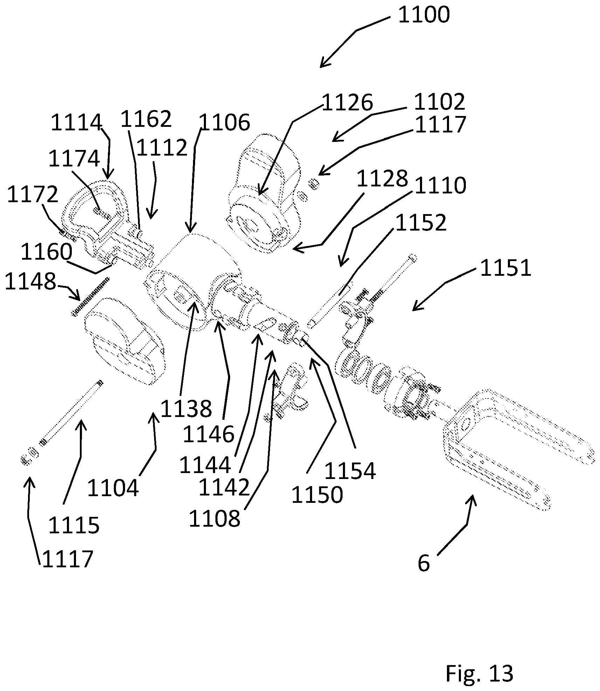

Figure 13 shows a second embodiment of a front wheel joint 1100. The front wheel joint 1100 is part of a golf trolley, such as golf trolley 1 as shown in figures 1 and 2, and enables the front wheel 3 to be collapsed to the position as shown in figure 2. The front wheel joint 1100 operates in a manner similar to the front wheel joint 100. Accordingly, parts of the front wheel joint 1100 that are comparable to or the same as those of front wheel joint 100 receive the same reference number, preceded by a '1'. Not all parts and their function of front wheel joint 1100 are described in detail, and reference is made to the description of front wheel joint 100 for a full explanation.

The front wheel joint 1100 comprises a right outer joint part 1102, a left outer joint part 1104, a middle joint part 1106, and a spindle 1108. The right outer joint part 1102 and the left outer joint part 1104 are mounted on the forward end of the frame 2, in this embodiment on the forward ends of longitudinal bars 22 (see fig. 1).

The front wheel joint 1100 comprises a slider 1110. In this embodiment, the front wheel joint 1100 further comprises a locking mechanism 1112 and a grip 1114. The right outer joint part 1102 and the left outer joint part 1104 are clamped together via a bolt 1115 and two nuts 1117. The bolt 1115 runs through the middle of the right outer joint part 1102, the middle joint part 1106, and the left outer joint part1104.

The right 1102 and left 1104 outer joint part are each provided with a partly circular stop groove 1126, and a first spiral slit, in this embodiment a spiral groove 1128 (only visible for the right outer joint part 1102). The middle joint part 1106 comprises a first straight slit 1138, and a second straight slit, opposite of the first straight slit 1138 (not shown).

The spindle 1108 has a spindle tube 1142, a first helical slit 1144, a second helical slit (not shown), a circular slit 1146, and a slider space (not shown). The circular slit 1146 cooperates with a pin 1148 which is provided through the middle joint part 1106 and the circular slit 1146, thus preventing a linear movement of the spindle 1108 with respect to the middle joint part 1106 in the direction of longitudinal axis, while allowing a rotational movement of the spindle 1108 with respect to the middle joint part 1106.

A lower end 1150 of spindle 1108 is connected to the front wheel support 6, via connecting means 1151.

The slider 1110 comprises a cylindrical slider body 1152, and a joint slider pin 1154. The cylindrical slider body 1152 is held in the cylindrical slider space of the spindle 1108. This enables the slider 1110 to slide along a longitudinal axis of the spindle 1108. The joint slider pin 1154 extends from the spiral groove in the left outer joint part 1104 through the first straight slit 1138 in the middle joint part 106, the first helical slit 1144 in the spindle 1108, the cylindrical slider body 1152, the second helical slit in the spindle 1108, the second straight slit in the middle joint part 1106, to the spiral groove 1128 in the right outer joint part 1102. In this way, the joint slider pin 1154 of the slider 1110 couples a rotating movement of the middle joint part 1106 with respect to the right outer joint part 1102 and the left outer joint part 1104 about a transverse pivot axis with a rotating movement of the spindle 1108 with respect to the middle joint part 1106 about a longitudinal pivot axis.

The locking mechanism 1112 comprises a first locking pin 1160 and a second locking pin 1162. The first and second locking pins 1160, 1162 are at their outside end fixed and connected to each other via the grip 1114. In this embodiment, the first and second locking pins 1160, 1162 and the grip 1114 are one integral element. Each locking pin 1160, 1162 is slidably held in a first and second cylindrical hole (not shown), that each extend in a radial direction through the middle joint part 1106. In this embodiment, the locking mechanism 1112 further comprises a first spring 1172, and a second spring 1174. In the protruded locking position, the locking pins 1160, 1162 abut a radial stop surface of the partly circular stop groove 1126. A user can disengage the locking mechanism 1112 by pulling the grip 1114. This forces the locking pins 1160, 1162 to slide against the spring action of the springs 1172, 1174, thus releasing the engagement with the relevant radial stop surface. This allows the middle joint part 1106 to rotate with respect to the right and left outer joint parts 1102, 1104.

Several variants are possible within the scope of the attached claims. The features of the above described preferred embodiments may be replaced by any other feature within the scope of the attached claims, such as the features described in other embodiments, and in the following paragraphs.

In an embodiment, the right outer joint part and the left outer joint part are clamped together. In particular, the right outer joint part and the left outer joint part are clamped together via clamping means. More in particular, the clamping means are provided on the front wheel joint. Even more in particular, the clamping means are a bolt and nut, that run through the right outer joint part, the middle joint part, and the left outer joint part, in particular through the middle of the right outer joint part, the middle joint part, and the left outer joint part. In particular the bolt serves as spindle for the transverse pivot axis. In an alternative embodiment, the clamping means are provided on the forward end of the frame, or are integrated with the forward end of the frame.

The first and second spiral slits are preferably flat spirals. However, a three-dimensional spiral slit is possible as well, causing the slider pin to move in its longitudinal direction as well. In the shown embodiment, the first and second spiral slit are no through slits, i.e. they are grooves within the surface of the right and left outer joint parts. In an alternative embodiment, the first and second spiral slits are through slits.

In a simple embodiment, there is just the first slider pin without a slider body running through the first helical slit, the straight slit, and the first spiral slit. In another embodiment, there is one joint slider pin, and the first slider pin is a first end of the joint slider pin and the second slider pin is a second end of the same joint slider pin, and there is no slider body. In an embodiment with a slider body, the slider body has a different cross section than a circular one, such as a polygon or an oval. Preferably, the cross section of the slider body corresponds to the cross section of the slider space in the spindle.

In an embodiment, there is just one stopper and/or one locking pin and/or one circular stop groove with associated radial stop surfaces.

The folding mechanism of the rear wheels and push bar is not of limiting the current invention. In an embodiment, the folding mechanism of the rear wheels and push bar is different than shown, e.g. by folding each rear wheel manually and separately from the folding of the push bar, instead of via a sliding mechanism coupled to the push bar. In an embodiment, the front and/or rear wheels pivot upward relative to the frame, instead of downward.

## Claims

1. Collapsible golf trolley with a front side, a back side, a left side, and a right side, all seen in the direction wherein the collapsible golf trolley (1) is intended to be pushed,
the collapsible golf trolley (1) comprising a frame (2), a front wheel (3), a front wheel support (6), a front wheel joint (100), a left rear wheel (4), and a right rear wheel (4),
each wheel (3, 4) being connected with the frame (2) and being rotatable about a rotation axis, the front wheel (3) being mounted on the front wheel support (6), the front wheel support (6) being connected via the front wheel joint (100) to a forward end of the frame (2) for collapsing the front wheel (3) from a use position to a collapsed position, wherein
the front wheel joint (100) comprises a right outer joint part (102), a left outer joint part (104), a middle joint part (106), and a spindle (108),
the right outer joint part (102) and the left outer joint part (104) are mounted on the forward end of the frame (2),
the middle joint part (106) is positioned between the right outer joint part (102) and the left outer joint part (104), and is rotatable with respect to the right outer joint part (102) and the left outer joint part (104) about a transverse pivot axis (107) which is substantially parallel to the rotation axes of the front wheel (3) in the use position,
the front wheel support (6) with the front wheel (3) is mounted on an end of the spindle (108), and
the spindle (108) extends within the middle joint part (106), and is rotatable with respect to the middle joint part (106) about a longitudinal pivot axis (109) which extends from the front wheel (3) to the front wheel joint (100) and is perpendicular to the rotation axis of the front wheel (3) and the transverse pivot axis (107), **characterised in that,**
the front wheel joint (100) comprises a slider (110), the slider (110) comprising a first slider pin (156), the slider (110) being slidable along the longitudinal pivot axis (109),
the spindle (108) comprises a first helical slit (144) on an outside of the spindle (108) facing the middle joint part (106), the middle joint part (106) comprises a first straight slit (138), and one of the right outer joint part (102) and left outer joint part (104) comprises a first spiral slit (128) on an inside of the respective right or left outer joint part (102, 104) facing the middle joint part (106), and
the first slider pin (156) extends through the first helical slit (144), the first straight slit (138), and the first spiral slit (128) for coupling a rotating movement of the middle joint part (106) with respect to the right outer joint part (102) and the left outer joint part (104) about the transverse pivot axis (107) with a rotating movement of the spindle (108) with respect to the middle joint part (106) about the longitudinal pivot axis (109).

2. Collapsible golf trolley according to claim 1, wherein the slider (110) comprises a slider body (152), the spindle (108) has a slider space (147) extending in the direction of the longitudinal pivot axis (109), the slider body (152) is held in the slider space (147) for sliding along the longitudinal pivot axis (109), the first slider pin (156) is mounted on the slider body (152), the first helical slit (144) is a through slit so that the slider pin extends from the slider body (152) through the first helical slit (144) to the first straight slit (138), and the first spiral slit (128).

3. Collapsible golf trolley according to claim 1, or 2, wherein the spindle (108) comprises a second helical slit on the outside of the spindle (108) opposite of the first helical slit (144), the middle joint part (106) comprises a second straight slit opposite of the first straight slit (138), the other one of the right outer joint part (102) and left outer joint part (104) comprises a second spiral slit on an inside of the respective outer joint part facing the middle joint part (106), and the slider (110) comprises a second slider pin (158) extending through the second helical slit, the second straight slit, and the second spiral slit.

4. Collapsible golf trolley according to claim 3, wherein the first slider pin (156) is a first end of a joint slider pin (154) and the second slider pin (158) is a second end of the same joint slider pin (154), and the first helical slit (144) and the second helical slit are through slits so that the joint slider pin (154) extends from the first spiral slit (128) through the first straight slit (138), the first helical slit (144), the second helical slit, the second straight slit, to the second spiral slit.

5. Collapsible golf trolley according to any one or more of the previous claims, wherein the spindle (108) has an annular ridge (146), and the middle joint part (106) has a corresponding annular groove (148) for restricting movement of the spindle (108) with respect to the middle joint part (106) in the direction of the longitudinal pivot axis (109).

6. Collapsible golf trolley according to any one or more of the previous claims, wherein the middle joint part (106) comprises an annular shaped rim (132), extending in a direction parallel to the transverse pivot axis (107) from an outer part of a side surface of the middle joint part (106) facing either the right or the left outer joint part (104), the annular shaped rim (132) and the side surface of the middle joint part (106) define a cylindrical rotation space (134), the respective right or left outer joint part (104) comprises an outer joint part body (122) and a disk shaped outer joint part core (124) having a smaller dimension than the outer joint part body (122) in a radial direction and extending from the outer joint part body (122) towards the side surface of the middle joint part (106), and the outer joint part core (124) is held in the cylindrical rotation space (134) for rotating about the transverse pivot axis (107).

7. Collapsible golf trolley, according to any one or more of the previous claims, comprising a locking mechanism (112), wherein the middle joint part (106) comprises a rim (132) extending from an outer part of a side surface of the middle joint part (106) facing either the right or the left outer joint part (102, 104) in a direction parallel to the transverse pivot axis (107), the respective right or left outer joint part (102, 104) comprises an outer joint part body (122) and an outer joint part core (124) having a smaller dimension than the outer joint part body (122) in a radial direction and extending from the outer joint part body (122) towards the side surface of the middle joint part (106), the rim (132) is aligned with and outside of the outer joint part core (124) in the radial direction, the locking mechanism (112) comprises a first locking pin (160) and a first radial stop surface (129), the first locking pin (160) is slidably held in a first cylindrical hole (164) extending in a radial direction through the rim (132), and the first radial stop surface (129) is provided at the outer joint part core (124) for engaging the first locking pin (160) in a protruded locking position of the first locking pin (160), locking the middle joint part (106) with respect to the right and left outer joint part (102, 104) in a first annular position.

8. Collapsible golf trolley, according to claim 6 and 7, wherein the rim (132) is the annular shaped rim (132), and the outer joint part core (124) is the disk shaped outer joint part core (124).

9. Collapsible golf trolley according to any one or more of the claims 7-8, wherein the locking mechanism (112) comprises a first spring cavity (168) and a first spring (172), the first spring cavity (168) being provided around the first cylindrical hole (164) and holding the first spring (172), the first spring (172) urging the first locking pin (160) into the protruded locking position.

10. Collapsible golf trolley according to any one or more of the claims 7-9, wherein the locking mechanism (112) comprises a second radial stop surface (130) which is provided at the outer joint part core (124) at a different angular position from the first radial stop surface (129) for engaging the first locking pin (160) in a protruded locking position of the first locking pin (160), locking the middle joint part (106) with respect to the right and left outer joint part (104) in a second annular position.

11. Collapsible golf trolley according to any one or more of the claims 7-10, wherein the locking mechanism (112) comprises a partly circular stop groove (126) comprising the first and optional second radial stop surface (129, 130), and a first stopper (136), fixedly connected to the side surface of the middle joint part (106) for moving through the partly circular stop groove (126), and engaging the first and the optional second radial stop surface (129, 130).

## Patentansprüche

1. Zusammenklappbarer Golftrolley mit einer Vorderseite, einer Rückseite, einer linken Seite und einer rechten Seite, alle in der Richtung gesehen, in welcher der zusammenklappbare Golftrolley (1) zum Schieben bestimmt ist,
der zusammenklappbare Golftrolley (1) einen Rahmen (2), ein Vorderrad (3), eine Vorderradstütze (6), ein Vorderradgelenk (100), ein linkes Hinterrad (4) und ein rechtes Hinterrad (4) umfasst,
wobei jedes Rad (3, 4) mit dem Rahmen (2) verbunden und um eine Drehachse drehbar ist, wobei das Vorderrad (3) an der Vorderradstütze (6) montiert ist, wobei die Vorderradstütze (6) über das Vorderradgelenk (100) mit einem vorderen Ende des Rahmens (2) verbunden ist, um das Vorderrad (3) aus einer Gebrauchsposition in eine eingeklappte Position zusammenzuklappen, wobei
das Vorderradgelenk (100) einen rechten äußeren Gelenkteil (102), einen linken äußeren Gelenkteil (104), einen mittleren Gelenkteil (106) und eine Spindel (108) umfasst,
das rechte äußere Gelenkteil (102) und das linke äußere Gelenkteil (104) am vorderen Ende des Rahmens (2) montiert sind,
das mittlere Gelenkteil (106) zwischen dem rechten äußeren Gelenkteil (102) und dem linken äußeren Gelenkteil (104) positioniert ist und in Bezug auf das rechte äußere Gelenkteil (102) und das linke äußere Gelenkteil (104) um eine Querdrehachse (107) drehbar ist, die im Wesentlichen parallel zu den Drehachsen des Vorderrades (3) in der Gebrauchsposition ist,
die Vorderradstütze (6) mit dem Vorderrad (3) an einem Ende der Spindel (108) montiert ist, und
die Spindel (108) sich innerhalb des mittleren Gelenkteils (106) erstreckt und in Bezug auf das mittlere Gelenkteil (106) um eine Längsachse (109) drehbar ist, die sich vom Vorderrad (3) zum Vorderradgelenk (100) erstreckt und senkrecht zur Drehachse des Vorderrades (3) und der Querlenkachse (107) steht, **dadurch gekennzeichnet dass,**
das Vorderradgelenk (100) einen Schieber (110) umfasst, wobei der Schieber (110) einen ersten Gleitstift (156) umfasst, wobei der Schieber (110) entlang der Längsachse (109) verschiebbar ist,
die Spindel (108) einen ersten helical Schlitz (144) an einer Außenseite der Spindel (108) aufweist, die dem mittleren Gelenkteil (106) zugewandt ist, das mittlere Gelenkteil (106) einen ersten geraden Schlitz (138) aufweist, und eines der rechten äußeren Gelenkteile (102) und das linke äußere Gelenkteil (104) einen ersten Spiralschlitz (128) an einer Innenseite des jeweiligen rechten oder linken äußeren Gelenkteils (102, 104) aufweist, die dem mittleren Gelenkteil (106) zugewandt ist, und
sich der erste Gleitstift (156) durch den ersten helical Schlitz (144), den ersten geraden Schlitz (138) und den ersten Spiralschlitz (128) erstreckt, um eine Drehbewegung des mittleren Gelenkteils (106) in Bezug auf das rechte äußere Gelenkteil (102) und das linke äußere Gelenkteil (104) um die Querlenkachse (107) mit einer Drehbewegung der Spindel (108) in Bezug auf das mittlere Gelenkteil (106) um die Längsachse (109) zu koppeln.

2. Zusammenklappbarer Golftrolley nach Anspruch 1, wobei der Schieber (110) einen Gleitkörper (152) umfasst, die Spindel (108) einen sich in Richtung der Längsachse (109) erstreckenden Schieberaum (147) aufweist, der Gleitkörper (152) im Schieberaum (147) zum Gleiten entlang der Längsachse (109) gehalten ist, der erste Gleitstift (156) auf dem Gleitkörper (152) montiert ist, der erste helical Schlitz (144) ein Durchgangsschlitz ist, so dass sich der Gleitstift vom Gleitkörper (152) über den ersten helical Schlitz (144) bis zum ersten geraden Schlitz (138) und dem ersten Spiralschlitz (128) erstreckt.

3. Zusammenklappbarer Golftrolley nach Anspruch 1 oder 2, wobei die Spindel (108) einen zweiten helical Schlitz an der Außenseite der Spindel (108) gegenüber dem ersten helical Schlitz (144) aufweist, das mittlere Gelenkteil (106) einen zweiten geraden Schlitz gegenüber dem ersten geraden Schlitz (138) aufweist, das andere des rechten äußeren Gelenkteils (102) und des linken äußeren Gelenkteils (104) einen zweiten Spiralschlitz auf einer dem mittleren Gelenkteil (106) zugewandten Innenseite des jeweiligen äußeren Gelenkteils aufweist, und der Schieber (110) einen zweiten Gleitstift (158) aufweist, der sich durch den zweiten Spiralschlitz, den zweiten geraden Schlitz und den zweiten Spiralschlitz erstreckt.

4. Zusammenklappbarer Golftrolley nach Anspruch 3, wobei der erste Gleitstift (156) ein erstes Ende eines Gesamtgleitstiftes (154) und der zweite Gleitstift (158) ein zweites Ende des gleichen Gesamtgleitstiftes (154) ist, und der erste helical Schlitz (144) und der zweite helical Schlitz durchgehende Schlitze sind, so dass sich der Gesamtgleitstift (154) von dem ersten Spiralschlitz (128) durch den ersten geraden Schlitz (138), den ersten helical Schlitz (144), den zweiten schraubenförmigen Schlitz, den zweiten geraden Schlitz, bis zum zweiten schraubenförmigen Schlitz erstreckt.

5. Zusammenklappbarer Golftrolley nach einem oder mehreren der vorstehenden Ansprüche, wobei die Spindel (108) einen ringförmigen Steg (146) aufweist und das mittlere Gelenkteil (106) eine entsprechende Ringnut (148) zum Einschränken der Bewegung der Spindel (108) in Bezug auf das mittlere Gelenkteil (106) in Richtung der Längsachse (109) aufweist.

6. Zusammenklappbarer Golftrolley nach einem oder mehreren der vorhergehenden Ansprüche, wobei das mittlere Gelenkteil (106) einen ringförmig geformten Rand (132) umfasst, der sich in einer Richtung parallel zur Querlenkachse (107) von einem Außenteil einer Seitenfläche des mittleren Gelenkteils (106) erstreckt, die entweder dem rechten oder dem linken äußeren Gelenkteil (104) zugewandt ist, wobei der ringförmige Rand (132) und die Seitenfläche des mittleren Gelenkteils (106) einen zylindrischen Rotationsraum (134) definieren, das jeweilige rechte oder linke äußere Gelenkteil (104) einen äußeren Gelenkteilkörper (122) und einen scheibenförmigen äußeren Gelenkteilkern (124) mit einer kleineren Abmessung als der äußere Gelenkteilkörper (122) in radialer Richtung umfasst und sich vom äußeren Gelenkteilkörper (122) zur Seitenfläche des mittleren Gelenkteils (106) erstreckt, und der äußere Gelenkteilkern (124) im zylindrischen Drehraum (134) zum Drehen um die Querlenkachse (107) gehalten ist.

7. Zusammenklappbarer Golftrolley, nach einem oder mehreren der vorhergehenden Ansprüche, umfassend einen Verriegelungsmechanismus (112), wobei das mittlere Gelenkteil (106) einen Rand (132) umfasst, der sich von einem Außenteil einer Seitenfläche des mittleren Gelenkteils (106) erstreckt, der entweder dem rechten oder dem linken äußeren Gelenkteil (102, 104) zugewandt ist, in einer Richtung parallel zur Querlenkachse (107), das jeweilige rechte oder linke äußere Gelenkteil (102, 104) einen äußeren Gelenkteilkörper (122) und einen äußeren Gelenkteilkern (124) mit einer kleineren Abmessung als der äußere Gelenkteilkörper (122) in radialer Richtung umfasst und sich vom äußeren Gelenkteilkörper (122) zur Seitenfläche des mittleren Gelenkteils (106) erstreckt, der Rand (132) mit und außerhalb des äußeren Gelenkteilkerns (124) in radialer Richtung ausgerichtet ist, der Verriegelungsmechanismus (112) einen ersten Sicherungsstift (160) und eine erste radiale Anschlagfläche (129) umfasst, der erste Sicherungsstift (160) verschiebbar in einem ersten zylindrischen Loch (164) gehalten wird, das sich in radialer Richtung durch der Rand (132) erstreckt, und die erste radiale Anschlagfläche (129) am äußeren Gelenkteilkern (124) zum Eingreifen des ersten Sicherungsstiftes (160) in einer vorstehenden Verriegelungsposition des ersten Sicherungsstiftes (160) vorgesehen ist, wobei das mittlere Gelenkteil (106) in Bezug auf das rechte und linke äußere Gelenkteil (102, 104) in einer ersten ringförmigen Position verriegelt ist.

8. Zusammenklappbarer Golftrolley nach Anspruch 6 und 7, wobei der Rand (132) der ringförmige Rand (132) ist und der äußere Gelenkteilkern (124) der scheibenförmige äußere Gelenkteilkern (124) ist.

9. Zusammenklappbarer Golftrolley nach einem oder mehreren der Ansprüche 7-8, wobei der Verriegelungsmechanismus (112) einen ersten Federhohlraum (168) und eine erste Feder (172) umfasst, wobei der erste Federhohlraum (168) um das erste zylindrische Loch (164) herum vorgesehen ist und die erste Feder (172) hält, wobei die erste Feder (172) den ersten Sicherungsstift (160) in die vorstehende Verriegelungsposition drückt.

10. Zusammenklappbarer Golftrolley nach einem oder mehreren der Ansprüche 7-9, wobei der Verriegelungsmechanismus (112) eine zweite radiale Anschlagfläche (130) umfasst, die am äußeren Gelenkteilkern (124) in einer anderen Winkelposition als die erste radiale Anschlagfläche (129) vorgesehen ist, um das mittlere Gelenkteil (106) in Bezug auf das rechte und linke äußere Gelenkteil (104) in einer zweiten ringförmigen Position zu verriegeln.

11. Zusammenklappbarer Golftrolley nach einem oder mehreren der Ansprüche 7-10, wobei der Verriegelungsmechanismus (112) eine teilweise kreisförmige Anschlagnut (126) mit der ersten und optionalen zweiten radialen Anschlagfläche (129, 130) und einen ersten Stopper (136) umfasst, der fest mit der Seitenfläche des mittleren Gelenkteils (106) verbunden ist, um sich durch die teilweise kreisförmige Anschlagnut (126) zu bewegen und in die erste und die optionale zweite radiale Anschlagfläche (129, 130) einzugreifen.

## Revendications

1. Chariot de golf pliable avec un côté avant, un côté arrière, un côté gauche et un côté droit, le tout vu dans la direction dans laquelle le chariot de golf pliable (1) est destiné à être poussé,
le chariot de golf pliable (1) comprenant un châssis (2), une roue avant (3), un support de roue avant (6), une articulation de roue avant (100), une roue arrière gauche (4) et une roue arrière droite (4),
chaque roue (3, 4) étant reliée au châssis (2) et pouvant tourner autour d'un axe de rotation, la roue avant (3) étant montée sur le support de roue avant (6), le support de roue avant (6) étant relié par l'articulation de roue avant (100) à une extrémité avant du châssis (2) pour replier la roue avant (3) d'une position de travail vers une position repliée, dans lequel
l'articulation de roue avant (100) comprend une partie d'articulation extérieure droite (102), une partie d'articulation extérieure gauche (104), une partie d'articulation centrale (106), et une broche (108),
la partie d'articulation extérieure droite (102) et la partie d'articulation extérieure gauche (104) sont montées sur l'extrémité avant du châssis (2),
la partie d'articulation centrale (106) est positionnée entre la partie d'articulation extérieure droite (102) et la partie d'articulation extérieure gauche (104), et peut tourner par rapport à la partie d'articulation extérieure droite (102) et à la partie d'articulation extérieure gauche (104) autour d'un axe de pivotement transversal (107) qui est sensiblement parallèle aux axes de rotation de la roue avant (3) en position de fonctionnement,
le support de roue avant (6) avec la roue avant (3) est monté sur une extrémité de la broche (108), et
la broche (108) s'étend à l'intérieur de la partie d'articulation centrale (106) et peut tourner par rapport à la partie d'articulation centrale (106) autour d'un axe de pivotement longitudinal (109) qui s'étend de la roue avant (3) à l'articulation de roue avant (100) et est perpendiculaire à l'axe de rotation de la roue avant (3) et l'axe transversal (107), **caractérisé en ce que,**
l'articulation de roue avant (100) comprend un coulisseau (110), le coulisseau (110) comprenant un premier goupille coulissante (156), le coulisseau (110) pouvant coulisser le long de l'axe pivot longitudinal (109),
la broche (108) comprend une première fente hélicoïdale (144) sur une face extérieure de la broche (108) tournée vers la partie d'articulation centrale (106), la partie d'articulation centrale (106) comprend une première fente droite (138), et une des parties d'articulation extérieure droite (102) et extérieure gauche (104) comprend une première fente spiralée (128) sur une face intérieure de la partie d'articulation externe droite ou gauche respective (102, 104) tournée vers la partie d'articulation centrale (106), et
la première goupille coulissante (156) s'étend à travers la première fente hélicoïdale (144), la première fente droite (138), et la première fente spiralée (128) pour coupler un mouvement de rotation de la partie de joint central (106) par rapport à la partie de joint externe droite (102) et la partie de joint externe gauche (104) autour de l'axe transversal (107) avec un mouvement rotatif de la broche (108) par rapport à la partie de joint central (106) autour de l'axe longitudinal (109).

2. Chariot de golf pliable selon la revendication 1, dans lequel le coulisseau (110) comprend un corps de coulisseau (152), la broche (108) présente un espace de coulisseau (147) s'étendant dans la direction de l'axe de pivotement longitudinal (109), le corps de coulisseau (152) est maintenu dans l'espace de coulisseau (147) pour glisser dans l'axe de pivotement longitudinal (109), le premier goupille coulissante (156) est monté sur le corps de coulisseau (152), la première fente hélicoïdale (144) est une fente traversante de sorte que l'axe de coulisseau s'étend du corps de coulisseau (152) à travers la première fente hélicoïdale (144) vers la première fente droite (138), et la première fente spiralée (128).

3. Chariot de golf pliable selon la revendication 1, ou 2, dans lequel l'axe (108) comprend une seconde fente hélicoïdale à l'extérieur de l'axe (108) opposée à la première fente hélicoïdale (144), la partie centrale d'articulation (106) comprend une seconde fente droite opposée à la première fente droite (138), l'autre partie parmi la partie d'articulation externe droite (102) et la partie d'articulation externe gauche (104) comprend une seconde fente en spirale sur une face intérieure de la partie d'articulation externe respective tournée vers la partie d'articulation centrale (106), et le coulisseau (110) comprend un deuxième axe de coulisse (158) s'étendant à travers la seconde fente en spirale, la seconde fente droite et la seconde fente en spirale.

4. Chariot de golf pliable selon la revendication 3, dans lequel la première goupille coulissante (156) est une première extrémité d'une goupille coulissante conjugué (154) et la deuxième goupille coulissante (158) est une deuxième extrémité de la même goupille coulissante conjugué (154), et la première fente hélicoïdale (144) et la seconde fente hélicoïdale sont des fentes à travers de sorte que l'axe de coulisse de joint (154) s'étend depuis la première fente spiralée (128) à travers la première fente droite (138), la première fente hélicoïdale (144), la seconde fente hélicoïdale, la seconde fente droite, la seconde fente droite, vers la seconde fente en spirale.

5. Chariot de golf pliable selon l'une ou plusieurs des revendications précédentes, dans lequel la broche (108) présente une arête annulaire (146) et la partie d'articulation centrale (106) présente une rainure annulaire correspondante (148) pour limiter le mouvement de la broche (108) par rapport à la partie d'articulation centrale (106) dans la direction de l'axe longitudinal (109) du pivot.

6. Chariot de golf pliable selon l'une ou plusieurs des revendications précédentes, dans lequel la partie d'articulation centrale (106) comprend une jante de forme annulaire (132) s'étendant dans une direction parallèle à l'axe de pivotement transversal (107) depuis une partie extérieure d'une surface latérale de la partie d'articulation centrale (106) tournée soit à droite soit à gauche, la jante annulaire (132) et la surface latérale de la partie d'articulation centrale (106) définissent une chambre de rotation cylindrique (134), la partie de joint extérieure droite ou gauche respective (104) comprend un corps de partie de joint extérieur (122) et un noyau de partie de joint extérieur en forme de disque (124) ayant une dimension plus petite que le corps de partie de joint extérieur (122) dans une direction radiale et s'étendant du corps de partie de joint extérieur (122) vers la surface latérale de la partie de joint central (106), et le noyau de partie de joint extérieur (124) est maintenu dans l'espace cylindrique (134) pour tourner autour de l'axe transversal (107).

7. Chariot de golf pliable, selon l'une quelconque ou plusieurs des revendications précédentes, comprenant un mécanisme de verrouillage (112), dans lequel la partie d'articulation centrale (106) comprend une jante (132) s'étendant depuis une partie extérieure d'une surface latérale de la partie d'articulation centrale (106) tournée vers la partie d'articulation extérieure droite ou gauche (102, 104) dans une direction parallèle à l'axe transversal (107), la partie de joint extérieure droite ou gauche respective (102, 104) comprend un corps de partie de joint extérieur (122) et un noyau de partie de joint extérieur (124) ayant une dimension plus petite que le corps de partie de joint extérieur (122) dans une direction radiale et s'étendant du corps de partie de joint extérieur (122) vers la surface latérale de la partie de joint central (106), la jante (132) est alignée avec et à l'extérieur du noyau (124) de la partie d'articulation externe dans la direction radiale, le mécanisme de verrouillage (112) comprend une première goupille de verrouillage (160) et une première surface de butée radiale (129), la première goupille de verrouillage (160) est maintenue de manière coulissante dans un premier trou cylindrique (164) s'étendant dans une direction radiale à travers la jante (132), et la première surface de butée radiale (129) est prévue au niveau de l'âme de la partie d'articulation extérieure (124) pour engager la première goupille de verrouillage (160) dans une position de verrouillage en saillie de la première goupille de verrouillage (160), verrouillant la partie d'articulation centrale (106) par rapport à l'articulation extérieure droite et gauche (102, 104) dans une première position annulaire.

8. Chariot de golf pliable, selon les revendications 6 et 7, dans lequel la jante (132) est la jante annulaire (132), et le noyau de la partie de jonction extérieure (124) est le noyau de la partie de jonction extérieure en forme de disque (124).

9. Chariot de golf pliable selon l'une quelconque des revendications 7-8, dans lequel le mécanisme de verrouillage (112) comprend une première cavité de ressort (168) et un premier ressort (172), la première cavité de ressort (168) étant prévue autour du premier trou cylindrique (164) et maintenant le premier ressort (172), le premier ressort (172) poussant le premier axe de verrouillage (160) en position de verrouillage faisant saillie.

10. Chariot de golf pliable selon l'une quelconque ou plusieurs des revendications 7-9, dans lequel le mécanisme de verrouillage (112) comprend une seconde surface de butée radiale (130) qui est prévue au niveau du noyau de la partie d'articulation extérieure (124) dans une position angulaire différente de la première surface de butée radiale (129) pour verrouiller la partie d'articulation centrale (106) par rapport à la partie de jonction extérieure droite et gauche (104) dans une seconde position annulaire.

11. Chariot de golf pliable selon l'une quelconque des revendications 7-10, dans lequel le mécanisme de verrouillage (112) comprend une rainure de butée partiellement circulaire (126) comprenant la première et la seconde surface de butée radiale en option (129, 130), et une première butée (136), relié de manière fixe à la surface latérale de la partie de jonction centrale (106) pour se déplacer dans la rainure de butée partiellement circulaire (126) et mettre en prise la première et la seconde surface de butée radiale en option (129, 130).
